# EUROPÄISCHE PATENTANMELDUNG

(11) **EP 2 169 004 A1**
(43) Veröffentlichungstag der Anmeldung: **31.03.2010**
(21) Anmeldenummer: 09008362.7
(22) Anmeldetag: 25.06.2009
(51) Int. Cl.: C08L 25/06, E02D 31/14, C08J 9/00, C08J 9/224

(54) **Dämmelement und Verwendung eines Dämmelementes**

(30) Priorität: 24.09.2008 DE 202008012675 U
(71) Anmelder: SCHWENK Dämmtechnik GmbH & Co KG, 86899 Landsberg (DE)
(72) Erfinder: Schiffke, Peter, 86925 Fuchstal-Leeder (DE)
(74) Vertreter: Seranski, Klaus

(57) **Zusammenfassung**

Die Erfindung betrifft ein Dämmelement zur Aussendämmung erdberührter Wand- und/oder Bodenbereich von Gebäuden aus einem Dämmmaterial mit einer Mindestdruckfestigkeit bei 10% Stauchung gemäß DIN 826 von 100 kPa oder mehr, insbesondere 150 kPa oder mehr, besonders bevorzugt 200 kPa oder mehr, wobei das Dämmmaterial 0,05 bis 25 Gew.-%, insbesondere 0,5 bis 8 Gew.-% athermaner Partikel aufweist.

## Beschreibung

Die Erfindung betrifft ein Dämmelement zur Aussendämmung erdberühter Wand-und/oder Bodenbereiche von Gebäuden aus einem Dämmmaterial mit einer Mindestdruckfestigkeit bei 10% Stauchung gemäß DIN 826 von 100 kPa oder mehr, insbesondere 150 kPa oder mehr, besonders bevorzugt 200 kPa oder mehr.

Dämmelemente dieser Art werden zur Aussendämmung im erdberührten Wand- und Bodenbereich eines Gebäudes, der üblicher Weise als Perimeter bezeichnet wird, eingesetzt. Im Zuge steigender Bau- und Grundstückskosten werden erdberührte Gebäudebereiche verstärkt auch als Wohnräume oder als anderweitige Räumlichkeiten benutzt. Aus diesem Grund ist es heute besonders wichtig, erdberührte Räume mit der richtigen Wärmedämmung auszustatten, denn ca. 20% der der Heizenergie werden über erdberührte Bauteile abgegeben. Mit einer dauerhaft funktionierenden Dämmung wird der Energieverbrauch wesentlich vermindert. Eine Perimeterdämmung wird von außen auf den Baukörper aufgelegt und umschließt diesen vorzugsweise wärmebrückenfrei, um so eine besonders gute Wärmedämmung zu gewährleisten.

Zu diesem Zweck einsetzbare Dämmelemente müssen eine besonders hohe Druckfestigkeit aufweisen, damit sie dem auf sie lastenden Erddruck standhalten können. Maß für die Beständigkeit von Dämmelementen ist der Belastungswert bei einer Materialstauchung von maximal 10%. Dieser Belastungswert charakterisiert das Verhalten eines Dämmelementes bei kurzzeitiger Druckbeanspruchung. Dieser Wert wird gemäß DIN EN 826 ermittelt. Daraus errechnet sich die Dauerdruckbelastung nach 50 Jahren bei 2% Stauchung (DIN EN 13163). Dieser beträgt das 0,3-fache der Druckbelastung bei 10% Stauchung. Zum Einsatz als Perimeterdämmung geeignete Dämmelemente müssen eine Mindestdruckfestigkeit gemäß DIN 826 von mindestens 100 kPa aufweisen. Derartige Dämmelemente werden üblicherweise aus extrudiertem Polystyrol, expandiertem Polystyrol oder Schaumglas hergestellt. Sie besitzen üblicherweise eine Wärmeleitfähigkeit von etwa 0,035 W/(m · K). Wenngleich dadurch bereits ein gute Wärmedämmung erreichbar ist, liegt der Erfindung die Aufgabe zugrunde, zum Einsatz bei der Aussendämmung geeignete Dämmelemente bereitzustellen, welche eine weiter reduzierte Wärmeleitfähigkeit aufweisen.

Erfindungsgemäß wird diese Aufgabe dadurch gelöst, daß das Dämmmaterial 0,05 bis 25 Gew.-%, insbesondere 0,5 bis 8 Gew.-% athermaner Partikel aufweist. Unter athermanen Partikeln werden solche Teilchen verstanden, welche Wärmestrahlung absorbieren. Dabei handelt es sich beispielsweise um Metallpulver, Metalloxide und/oder Kohlenstoffpartikel, wie etwa Ruß oder Graphit.

Dabei geht die Erfindung auf die Erkenntnis zurück, daß auch im Bereich der Aussendämmung im erdberührten Wand- und/oder Bodenbereich von Gebäuden bzw. bei einer Perimeterdämmung mit Dämmelementen, welche zum Erhalt der gewünschten Druckfestigkeit eine vergleichsweise hohe Rohdichte aufweist, neben der Wärmeleitung durch Gitterschwingungen bzw. der Kontaktwärmeleitfähigkeit die Abgabe von Wärme über Wärmestrahlung eine besondere Bedeutung hat. Dabei wurde im Rahmen der Erfindung erkannt, daß ansonsten eine hohe Wärmeleitfähigkeit aufweisende athermaner Partikel, wie etwa Metallpulver, in Kombination mit anderen Dämmstoffe derart gewinnbringend eingesetzt werden können, daß auch bei Dämmelementen mit zum Erhalt der gewünschten Druckfestigkeit erforderlichen hohen Rohdichten der Effekt der Verminderung der Abgabe von Wärme über Wärmestrahlung den Effekt der erhöhten Kontaktwärmeleitfähigkeit überwiegt, wenn die athermanen Partikel in dem Dämmelement in einer Menge von 0,05 bis 25 Gew.-%, besonders bevorzugt 0,5 bis 8 Gew.-% enthalten sind.

Zum Erhalt der gewünschten Druckfestigkeit weist das Dämmmaterial eine Rohdichte von 20 bis 40 g/l, insbesondere 22 bis 32 g/l, besonders bevorzugt 25 bis 30 g/l auf.

Weiter ist bekannt, daß die Wärmeleitfähigkeit ansteigt, wenn das Dämmelement feucht wird. Zur Vermeidung dieses Effekts kann dem Dämmmaterial 0,001 bis 0,5 Gew.-%, besonders bevorzugt 0,01 bis 0,3 Gew.-% Hydrophobierungsmittels zugesetzt werden. Dabei können die Partikel aus extrudiertem Polystyrol, expandiertem Polystyrol oder Schaumglas mit dem Hydrophobierungsmittel beschichtet werden. Wie vorstehend bereits erläutert, können die im Rahmen der Erfindung einsetzbaren athermalen Partikel Metallpulver, Metalloxyde und/oder Kohlenstoffpartikel, wie etwa Ruß oder Graphit, aufweisen. Im Rahmen der Erfindung einsetzbare Dämmmaterialien können wie herkömmliche Dämmelemente extrudiertes Polystyrol, expandiertes Polystyrol und/oder Schaumglas aufweisen.

Durch Einsatz der athermalen Partikel in dem Dämmmaterial kann die Wärmeleitfähigkeit auf 0,030 W/(m · K) oder weniger reduziert werden.

Wie der vorstehenden Erläuterung erfindungsgemäßer Dämmelemente zu entnehmen ist, werden diese Dämmelemente mit besonderem Vorteil im Bereich der Aussendämmung erdberührter Wand und/oder Bodenbereiche von Gebäuden eingesetzt. Dazu werden die Dämmelemente an einer Außenwand und/oder am Boden des Gebäudes befestigt und bilden so eine Perimeterdämmung.

Durchgeführte Versuche haben gezeigt, daß bei einem Rohstoffeinsatz von 26/I eine Druckfestigkeit von 150 kPa erreicht werden kann, die für einen Einsatz als Perimeterdämmung bis 3 m Einbautiefe ausreichend ist. Bei Einsatz geeigneter Hydrophobierungsmittel betrug die Wasseraufnahme nach 28 Tagen bei 23°C 0,5 bis 1,5 Vol.-% und lag damit deutlich unter den üblichen Anforderungen von 5 Vol.-%. Es wurde eine Wärmeleitfähigkeit von weniger als 0,030 W/ (m · K) festgestellt.

Als Rohstoff wurde ein Granulat aus expandiertem Polystyrol verwendet, das einen Anteil athermaner Partikel von 0,5 bis 8,0 Gew.-% enthielt. Die Partikel aus expandiertem Polystyrol wurden 0,01 bis 0,3 Gew.-% eines Hydrophobierungsmittels beschichtet. Das Dämmelement kann sowohl in Blockform als auch in Formteilautomaten hergestellt werden.

Die Erfindung ist nicht auf die vorstehend im einzelnen beschriebenen Ausführungsbeispiele beschränkt. Vielmehr ist auch an den Einsatz von Dämmelementen aus anderen Werkstoffe gedacht, die mit athermanen Partikeln versetzt sind. Wesentlich ist im Rahmen der Erfindung lediglich die Kombination aus einzuhaltender Druckfestigkeit einerseits und der angegebenen Menge athermaner Partikel in dem Dämmelement.

## Patentansprüche

1. Dämmelement zur Aussendämmung erdberührter Wand- und/oder Bodenbereich von Gebäuden aus einem Dämmmaterial mit einer Mindestdruckfestigkeit bei 10% Stauchung gemäß DIN 826 von 100 kPa oder mehr, insbesondere 150 kPa oder mehr, besonders bevorzugt 200 kPa oder mehr, **dadurch gekennzeichnet, daß** das Dämmmaterial 0,05 bis 25 Gew.-%, insbesondere 0,5 bis 8 Gew.-% athermaner Partikel aufweist.

2. Dämmelement nach Anspruch 1, **dadurch gekennzeichnet, daß** das Dämmmaterial eine Rohdichte von 20 bis 40 g/l, insbesondere 22 bis 32 g/l, besonders bevorzugt 25 bis 30 g/l aufweist.

3. Dämmelement nach Anspruch 1 oder 2, **dadurch gekennzeichnet, daß** das Dämmmaterial 0,001 bis 0,5 Gew.-%, insbesondere 0,01 bis 0,3 Gew.-% eines Hydrophobierungsmittels aufweist.

4. Dämmelement nach einem der vorhergehenden Ansprüche, **dadurch gekennzeichnet, daß** die athermanen Partikel Metallpulver, Metalloxyde und/oder Kohlenstoffpartikel, wie etwa Russ oder Graphit aufweisen.

5. Dämmelement nach einem der vorhergehenden Ansprüche, **dadurch gekennzeichnet, daß** das Dämmmaterial extrudiertes Polystyrol, expandiertes Polystyrol und/oder Schaumglas aufweist.

6. Dämmelement nach einem der vorhergehenden Ansprüche, **gekennzeichnet durch** eine Wärmeleitfähigkeit von 0,030 W/(m · K) oder weniger.

7. Verwendung eines Dämmelementes nach einem der vorhergehenden Ansprüche zur Außendämmung erdberührter Wand- und/oder Bodenbereiche von Gebäuden.

8. Verwendung nach Anspruch 7, bei der das Dämmelement an einer Außenwand und/oder am Boden des Gebäudes befestigt wird.
